# EUROPÄISCHE PATENTSCHRIFT

(11) **EP 3 438 514 B1**
(45) Veröffentlichungstag und Bekanntmachung des Hinweises auf die Patenterteilung: **26.02.2020**
(21) Anmeldenummer: 18163748.9
(22) Anmeldetag: 23.03.2018
(51) Int. Cl.: F16K 1/44, F16K 41/12, F16J 3/02

(54) **DOPPELSITZVENTIL FÜR ASEPTISCHE PRODUKTLEITUNGEN**
DOUBLE SEAL VALVE FOR ASEPTIC PRODUCT LINES
SOUPAPE À DOUBLE SIÈGE POUR CONDUITES DE PRODUIT ASEPTIQUES

(30) Priorität: 31.07.2017 DE 102017213153
(43) Veröffentlichungstag der Anmeldung: 06.02.2019
(73) Patentinhaber: Evoguard GmbH, 93149 Nittenau (DE)
(72) Erfinder: Justl, Johann, 93149 Nittenau (DE)
(74) Vertreter: Grünecker Patent- und Rechtsanwälte PartG mbB

(56) Entgegenhaltungen:
- EP-A1- 2 734 757
- DE-C5-102006 025 653

## Beschreibung

Die Erfindung betrifft ein Doppelsitzventil für aseptische Produktleitungen nach den Merkmalen des Oberbegriffs von Anspruch 1, ein Verfahren zur Montage eines Doppelsitzventils nach den Merkmalen des Oberbegriffs von Anspruch 1 und eine Getränkebehandlungs- und/oder Abfüllanlage mit wenigstens einem Doppelsitzventil nach den Merkmalen des Oberbegriffs von Anspruch 1.

Üblicherweise werden Doppelsitzventile bei der Führung von besonders empfindlichen Produkten im Bereich der Lebensmittelherstellung eingesetzt, beispielsweise bei der aseptischen Abfüllung von flüssigen oder viskosen Produkten in Behälter. Üblicherweise weisen derartige Doppelsitzventile zwei zwischen den Leitungsanschlüssen am Ventilgehäuse ausgebildete Ventilsitze auf, gegen die zwei unabhängig voneinander mittels Ventilschäften betätigbare Schließelemente wirken. Dadurch wird zwischen den Ventilsitzen eine Sicherheitskammer für Leckagen gebildet, die beispielsweise bei Druckstößen ein unbeabsichtigtes Überströmen des Produkts von einem Leitungsanschluss in den anderen Leitungsanschluss vermindert.

Bei aseptischen Anwendungen ist eine hermetische Abdichtung der vom Produkt durchströmten Bereiche des Doppelsitzventils gegenüber der übrigen Mechanik mit den Ventilgeschäften und den Antrieben erforderlich. Da sich unter anderen die beiden Schließelemente bei der Betätigung gegeneinander bewegen, ist bekannt, zur Abdichtung eine ringförmig ausgebildete Membrandichtung einzusetzen.

Aus der EP 2 734 757 B1 und der DE 10 2006 025 653 C5 sind derartige aseptische Doppelsitzventile mit einer Membran zwischen den beiden Schließkörpern bekannt.

Nachteilig dabei ist, dass die Membran zur Befestigung zwischen den beiden Schließkörpern aufwändige Montageelemente erfordert. Zudem bilden sich zwischen den einzelnen Montageelementen Kontaktstellen mit mikroskopischen Spalten aus, die gegenüber dem Produkt abgedichtet werden müssen, damit sich darin keine Verschmutzungen ansetzen.

Aufgabe der vorliegenden Erfindung ist es daher, die bekannten Doppelsitzventile hinsichtlich der Befestigung der Membran und der Bildung von Kontaktstellen zu verbessern.

Zur Lösung dieser Aufgabenstellung stellt die Erfindung ein Doppelsitzventil mit den Merkmalen des Anspruchs 1 bereit. Vorteilhafte Ausführungsformen der Erfindung sind in den Unteransprüchen genannt.

Durch das Umbiegen des äußeren Befestigungsbereichs um mehr als 90° kann das erste Befestigungselement radial innerhalb des äußeren Befestigungsbereichs der Membrandichtung angeordnet werden, was zum Produktraum hin weisende Kontaktstellen des ersten Befestigungselements unnötig macht. Folglich ist das erfindungsgemäße Doppelsitzventil hinsichtlich der Bildung von Kontaktstellen verbessert.

Dadurch, dass der äußere Befestigungsbereich der ringförmigen Membrandichtung nach innen zur Ventilachse hin um einen Winkel von mehr als 90° umgebogen ist, so dass er auf der konischen Fläche des ersten Befestigungselements aufliegt, kann das erste Befestigungselement bei der Montage zunächst in die Membrandichtung eingelegt werden, so dass beide als Einheit montierbar sind. Anschließend kann diese Einheit zwischen den beiden Schießelementen besonders einfach befestigt werden.

Das Doppelsitzventil kann in einer Getränkebehandlungs- und/oder Abfüllanlage angeordnet sein, um die aseptischen Produktleitungen miteinander zu verbinden. Vorzugsweise kann das Doppelsitzventil einem Füller zum Abfüllen eines Produkts in Behälter zugeordnet sein. Die aseptischen Produktleitungen können dazu vorgesehen sein, ein besonders empfindliches Produkt, wie beispielsweise ein Molkereiprodukt nach dem Sterilisieren zu führen. Das Molkereiprodukt kann insbesondere H-Milch, Joghurt und dergleichen sein. Das besonders empfindliche Produkt kann beispielsweise auch stilles Mineralwasser sein.

Das Doppelsitzventil kann eine Produktkammer umfassen, deren Außenwand durch einen ersten kugelförmigen oder rohrförmigen Abschnitt des Ventilgehäuses gebildet wird. Ferner können das erste Schließelement und der zugehörige Ventilsitz einen Übergang zwischen der Produktkammer und der Sicherheitskammer bilden. Denkbar ist, dass das erste Schließelement einen ersten Ventilteller und einen Verbindungsschaft umfasst, wobei der Verbindungsschaft den ersten Ventilschaft im Bereich der Produktkammer umschließt. Vorzugsweise kann der Verbindungsschaft mit dem ersten Ventilteller einstückig ausgebildet sein. Der Verbindungsschaft kann mit dem ersten Ventilschaft verbunden sein und/oder der erste Ventilteller kann mit dem ersten Ventilsitz zusammenwirken. Vorzugsweise kann der erste Ventilschaft einen Absatz umfassen, wobei das erste Schließelement zwischen dem Absatz und dem ersten Schließelement einspannbar ist. Über eine ringförmige Membran kann das dem ersten Ventilteller gegenüberliegende Ende des Verbindungsschafts gegen das Ventilgehäuse abgedichtet sein.

Die Sicherheitskammer kann als zweiter kugelförmiger oder rohrförmiger Abschnitt des Ventilgehäuses ausgebildet sein, der über den zum ersten Schließelement zugeordneten Ventilsitz an die Produktkammer angrenzt. Das eine Ende der Sicherheitskammer kann durch das erste Schließelement und das andere Ende der Sicherheitskammer kann durch das zweite Schließelement gebildet werden. Vorzugsweise kann die Produktkammer im Betrieb vertikal über der Sicherheitskammer angeordnet sein. Entsprechend kann das erste Schließelement im Betrieb vertikal über dem zweiten Schließelement angeordnet sein. Mit "vertikal" kann die Richtung gemeint sein, die auf den Erdmittelpunkt zeigt. Vorzugsweise kann der eine der beiden Leitungsanschlüsse direkt mit der Produktkammer und der andere der beiden Leitungsanschlüsse nur über das zweite Schließelement mit der Sicherheitskammer verbunden sein.

Das zweite Schließelement kann einen Zwischenschaft und einen zweiten Ventilteller umfassen. Vorzugsweise kann der Zwischenschaft mit dem zweiten Ventilteller einstückig ausgebildet sein. Der Zwischenschaft kann mit dem zweiten Ventilschaft verbunden sein und/oder der zweite Ventilteller kann mit dem zweiten Ventilsitz zusammenwirken.

Vorzugsweise können das erste und das zweite Schließelement rotationssymmetrisch um die Ventilachse ausgebildet sein und/oder am ersten bzw. zweiten Ventilteller äußere Dichtungsränder umfassen, die gegen die beiden Ventilsitze wirken. Vorzugsweise können die beiden Ventilsitze kreisringförmig um die Ventilachse verlaufen.

Der erste und der zweite Ventilschaft können jeweils mit einem Antrieb verbunden sein, um das erste bzw. zweite Schließelement zu betätigen. Ein derartiger Antrieb kann beispielsweise ein pneumatischer Linearantrieb sein. Der erste und/oder der zweite Ventilschaft können einstückig ausgebildet sein. Denkbar ist jedoch auch ein mehrteiliger Aufbau.

Dass die Membrandichtung ringförmig ausgebildet ist, kann hier bedeuten, dass die Membrandichtung eine rotationssymmetrische Form aufweist, die insbesondere tellerförmige ist. Zudem kann dies bedeuten, dass die Membrandichtung zur Verbindung des zweiten Schließelements mit dem zweiten Ventilschaft eine kreisrunde Öffnung aufweist, die in deren Zentrum, vorzugsweise im Bereich der Ventilachse ausgebildet ist. Das "der äußere Befestigungsbereich der ringförmigen Membrandichtung nach innen zur Ventilachse hin um einen Biegewinkel von mehr als 90° umgebogen ist" kann hier bedeuten, dass der äußere Befestigungsbereich durch ein Umformverfahren und/oder ein Einspannen mit dem ersten Befestigungselement dauerhaft so verformt ist. Anders ausgedrückt kann der äußere Befestigungsbereich der ringförmigen Membrandichtung im montierten Zustand durch das erste Befestigungselement um einen Biegewinkel von mehr als 90° umgebogen sein. Vorzugsweise kann der äußere Befestigungsbereich der ringförmigen Membrandichtung derart dauerhaft umgebogen sein, dass er eine konische Fläche bildet, die ab einer Biegelinie konisch nach innen zur Ventilachse zuläuft. Der Biegewinkel kann beispielsweise dadurch bestimmt werden, dass vorzugsweise im montierten Zustand der Winkel des äußeren Befestigungsbereichs gegenüber einer Ebene bestimmt wird, die senkrecht zur Ventilachse und/oder die parallel zu einem äußersten, kreisförmigen Rand der ringförmigen Membrandichtung verläuft.

Die ringförmige Membrandichtung kann über den äußeren Befestigungsbereich direkt mit dem ersten Ventilteller des ersten Schließelements und/oder an einem inneren Befestigungsbereich direkt mit dem Verbindungsschaft des zweiten Schließelements verbunden sein.

Vorzugsweise kann die ringförmige Membrandichtung wenigstens zwei miteinander verbundene Lagen aus gerecktem PTFE-Kunststoff (auch als Teflon™ bekannt) umfassen, deren Fasern in unterschiedlichen Richtungen zueinander ausgerichtet sind, vorzugsweise wobei die unterschiedlichen Richtungen senkrecht zueinander stehen. Dadurch ist die ringförmige Membrandichtung für eine lange Lebensdauer besonders robust aufgebaut. Die beiden miteinander verbundenen Lagen können folienartig ausgebildet sein. Vorzugsweise können die beiden Lagen durch einen Klebstoff oder ein Verbindungskunststoff miteinander verbunden sein. Üblicherweise bilden sich die Fasern im Material in der Richtung aus, in der der PTFE-Kunststoff gereckt wird. Bei einer Biegelinie in Richtung der Fasern können die Lagen aus gerecktem PTFE-Kunststoff eine höhere Steifigkeit aufweisen, als bei einer anderen Biegelinie quer zu den Fasern. Dadurch, dass die Richtungen der Fasern der beiden Lagen in unterschiedlichen Richtungen zueinander stehen, vorzugsweise senkrecht, weist der Verbund eine gleichmäßigere Steifigkeit auf, als die einzelnen Lagen.

Der äußere Befestigungsbereich der ringförmigen Membrandichtung kann durch das Umformverfahren dauerhaft um einen Umformwinkel derart umgebogen sein, dass der Umformwinkel in einem unmontierten Zustand, d.h. ohne weitere Stütz- oder Einspannelemente in einem Bereich von 91° - 135°, vorzugsweise in einem Bereich von 95° - 120° liegt. Dadurch wirkt eine Federwirkung des äußeren Befestigungsbereichs der Membrandichtung nach innen hin gegen die konische Fläche des ersten Befestigungselements und die ringförmige Membrandichtung kann bei der Montage auf das erste Befestigungselement aufgeklipst und besonders sicher fixiert werden. Das Umformverfahren kann beispielsweise ein thermisches Umformverfahren sein, bei dem wenigstens der äußere Befestigungsbereich erwärmt, umgeformt und wieder abgekühlt wird. Beispielsweise kann ein kreisscheibenförmiger Rohling wenigstens an einem äußeren Randbereich erwärmt werden, der dann als der äußere Befestigungsbereich umgebogen wird. Das Umbiegen kann beispielsweise mittels einer Form erfolgen.

Der äußere Befestigungsbereich kann um den Biegewinkel von mehr als ein 91°, vorzugsweise von mehr als 95°, weiterhin vorzugsweise von mehr als 100° umgebogen sein. Dadurch ergibt sich ein besserer Halt der ringförmigen Membrandichtung an der konischen Fläche des ersten Befestigungselements. Vorzugsweise kann der äußere Befestigungsbereich um den Biegewinkel in einem Bereich von 91° bis 135°, vorzugsweise in einem Bereich von 95° bis 120° umgebogen sein. Dadurch kann das erste Befestigungselement besonders leicht in die ringförmige Membrandichtung zur Montage eingesetzt werden.

Die ringförmige Membrandichtung kann an einer tellerförmigen Seite des ersten Schließelements angeordnet sein, die einen Wandabschnitt der Sicherheitskammer bildet. Dadurch ist die ringförmige Membrandichtung im Betrieb an einer vertikal oberen Seite der Sicherheitskammer angeordnet, so dass daran anhaftendes Produkt durch die Schwerkraft besonders leicht wieder abfließt. Vorzugsweise kann die tellerförmige Seite des ersten Schließelements dazu vorgesehen sein, im Betrieb eine vertikal obere Seite der Sicherheitskammer zu bilden. Anders ausgedrückt kann die tellerförmige Seite des ersten Schließelement im Betrieb an einer Unterseite des ersten Ventiltellers angeordnet sein. Vorzugsweise kann das erste Schließelement, vorzugsweise der erste Ventilteller eine Vertiefung umfassen, in der das erste Befestigungselement und/oder die ringförmige Membrandichtung wenigstens teilweise einsetzbar sind.

Das erste Schließelement kann eine Gegenfläche für die konische Fläche des ersten Befestigungselements umfassen, um den äußeren Befestigungsbereich zwischen dem ersten Befestigungselement und dem ersten Schließelement einzuklemmen, wobei vorzugsweise die konische Fläche und die Gegenfläche einen sich nach außen hin verjüngenden Klemmspalt bilden, um den äußeren Befestigungsbereich der ringförmigen Membrandichtung vor einem Herausrutschen aus dem Klemmspalt zu sichern. Dadurch kann die ringförmige Membrandichtung besonders sicher zum ersten Schließelement hin eingespannt werden. Die konische Fläche und die Gegenfläche können unterschiedliche Konuswinkel aufweisen, um den sich nach außen hin verjüngenden Klemmspalt zu bilden.

Die konische Fläche des ersten Befestigungselements und/oder die Gegenfläche des ersten Schließelements können eine Riffelung oder erhöhte Oberflächenrauhigkeit aufweisen, um den äußeren Befestigungsbereich der ringförmigen Membrandichtung gegen ein Verrutschen zu sichern. Dadurch kann die ringförmige Membrandichtung besonders sicher zwischen der konischen Fläche und der Gegenfläche fixiert werden. Mit "erhöhter Oberflächenrauhigkeit" können hier eine mittlere Rauheit Ra in einem Bereich von 10 - 15 µm und/oder eine gemittelte Rautiefe Rz in einem Bereich von 40 - 60 µm gemeint sein

Das erste Befestigungselement und der erste Ventilschaft können über ein erstes Schraubgewinde derart miteinander verbindbar sein, dass beim Verschrauben der äußere Befestigungsbereich der ringförmigen Membrandichtung zwischen dem ersten Befestigungselement und dem ersten Schließelement einklemmbar ist. Dadurch kann das erste Befestigungselement und die ringförmige Membrandichtung besonders einfach befestigt werden. Vorzugsweise kann der erste Ventilschaft eine als Absatz ausgebildete Spannfläche umfassen, wobei das erste Schließelement durch das Verschrauben des ersten Schraubgewindes zwischen dem ersten Befestigungselement und der Spannfläche einspannbar ist.

Das erste Befestigungselement und das erste Schließelement können mit Zentrierflächen ausgebildet sein, um das erste Befestigungselement am ersten Schließelement zu zentrieren. Dadurch ist gewährleistet, dass das erste Befestigungselement gegenüber dem ersten Schließelement bei der Montage zentriert wird, so dass der äußere Befestigungsbereich der ringförmigen Membrandichtung gleichmäßig eingespannt wird. Denkbar ist, dass die Zentrierflächen zylinderförmig ausgebildet sind. Vorzugsweise können die Zentrierflächen als Passflächen gefertigt sein.

Das erste Befestigungselement und das erste Schließelement können mit korrespondierenden, formschlüssigen Konturbereichen ausgebildet sein, um ein Verdrehen des ersten Befestigungselements gegen das erste Schließelement zu verhindern. Dadurch ist bei der Montage gewährleistet, dass sich die ringförmige Membrandichtung nicht beim Einspannen durch ein Verdrehen des ersten Befestigungselements verzieht. Beispielsweise können die formschlüssigen Konturbereiche als ineinandergreifende Sechskante ausgebildet sein.

An dem zweiten Schließelement können im Bereich der Sicherheitskammer der Zwischenschaft zur Verbindung mit dem zweiten Ventilschaft angeordnet sein, wobei die ringförmige Membrandichtung den inneren Befestigungsbereich umfasst, der durch ein zweites Befestigungselement mit dem Zwischenschaft verbunden ist. Dadurch kann der innere Befestigungsbereich der ringförmigen Membrandichtung besonders einfach mit dem zweiten Schließelement verbunden werden. Der innere Befestigungsbereich kann ein innerer Rand der ringförmigen Membrandichtung sein, der die kreisrunde Öffnung zur Verbindung des zweiten Schließelements mit dem zweiten Ventilschaft bildet. Das zweite Befestigungselement kann einen Fortsatz aufweisen, der durch die kreisrunde Öffnung der ringförmigen Membrandichtung hindurch ragt, um die ringförmige Membrandichtung zu zentrieren.

Vorzugsweise kann der Zwischenschaft an einem zum ersten Schließelement hin gerichteten Ende eine Gegenfläche für eine kreisscheibenförmige Fläche des zweiten Befestigungselements umfassen, um den inneren Befestigungsbereich der ringförmigen Membrandichtung zwischen dem zweiten Befestigungselement und dem Zwischenschaft einzuklemmen. Dadurch kann der Zwischenschaft und das zweite Befestigungselement besonders einfach gefertigt werden. Vorzugsweise können die Gegenfläche und die kreisscheibenförmige Fläche des zweiten Befestigungselements eine ebene Form aufweisen. Mit "kreisscheibenförmiger Fläche" kann hier eine Fläche gemeint sein, die im Wesentlichen eben und durch einen inneren kreisförmigen Rand und durch einen äußeren kreisförmigen Rand begrenzt ist.

Das zweite Befestigungselement und der Zwischenschaft können über ein zweites Schraubgewinde derart miteinander verbindbar sein, dass beim Verschrauben des zweiten Schraubgewindes der innere Befestigungsbereich der ringförmigen Membrandichtung zwischen dem zweiten Befestigungselement und dem Zwischenschaft eingeklemmt wird. Dadurch ist eine besonders einfache Montage der ringförmigen Membrandichtung am Zwischenschaft des zweiten Schließelements möglich.

Der zweite Ventilschaft, das zweite Befestigungselement und/oder der Zwischenschaft können mit Zentrierflächen ausgebildet sein, um den Zwischenschaft und/oder das zweite Befestigungselement am zweiten Ventilschaft zu zentrieren. Durch die Zentrierung wird eine rotationssymmetrische Anordnung der ringförmigen Membrandichtung zum zweiten Ventilschaft gewährleistet. Dadurch wird die ringförmige Membrandichtung besonders gleichmäßig verformt, so dass ein übermäßiger Verschleiß vermieden wird.

Die ringförmige Membrandichtung kann einen scheibenförmigen Membranbereich umfassen, wobei der innere Rand des scheibenförmigen Membranbereichs den inneren Befestigungsbereich bildet, wobei der äußere Befestigungsbereich außen an dem scheibenförmigen Membranbereich anschließt, und wobei der äußere Befestigungsbereich mit dem scheibenförmigen Membranbereich einen Winkel von weniger als 90° einschließt, vorzugsweise von weniger als 89°, weiterhin vorzugsweise von weniger als 85°, weiterhin vorzugsweise von weniger als 80°. Dadurch ist ein besonders einfacher Aufbau der ringförmigen Membrandichtung möglich und beim Umformen werden möglichst geringe Spannungen ins Material eingebracht. Vorzugsweise kann der äußere Befestigungsbereich mit dem scheibenförmigen Membranbereich einen Winkel in einem Bereich von 45° bis 89°, vorzugsweise in einem Bereich von 60° - 85° einschließen. Dadurch kann das erste Befestigungselement besonders einfach in die ringförmige Membrandichtung eingelegt werden, ohne den äußeren Befestigungsbereich übermäßig zu belasten. Der eingeschlossene Winkel des äußeren Befestigungsbereichs mit dem scheibenförmigen Membranbereich kann in einem montierten Zustand gemeint sein.

Darüber hinaus stellt die Erfindung mit dem Anspruch 16 ein Verfahren zur Montage des Doppelsitzventils nach einem der Ansprüche 1 - 15 bereit. Zudem kann das Verfahren die zuvor beschriebenen Merkmale einzelnen oder in beliebigen Kombinationen sinngemäß umfassen.

Dadurch, dass das erste Befestigungselement zunächst in die ringförmige Membrandichtung eingelegt wird, so dass durch die Federwirkung des äußeren Befestigungsbereichs der Kraftschluss mit der konischen Fläche des ersten Befestigungselements erfolgt, wird die ringförmige Membrandichtung am ersten Befestigungselement fixiert. Folglich ist es möglich, beide anschließend als Einheit mit dem ersten Schließelement zu verbinden. Folglich ist die Montage besonders einfach und mit wenigen Elementen möglich. Dadurch, dass das erste Befestigungselement auf diese Weise radial innerhalb des äußeren Befestigungsbereichs der ringförmigen Membrandichtung eingelegt wird, werden weitere nach außen gerichtete Kontaktstellen des ersten Befestigungselements zu anderen Montageelementen vermieden. Folglich ist das erfindungsgemäße Verfahren zur Montage des Doppelsitzventils auch hinsichtlich der Bildung von Kontaktstellen verbessert.

Anders ausgedrückt kann die ringförmige Membrandichtung durch den um mehr als 90° umgebogenen äußeren Befestigungsbereich auf das erste Befestigungselement aufgeklippst werden und als vormontierte Einheit im Doppelsitzventil montiert werden. Denkbar ist auch, dass zuerst das zweite Befestigungselement und anschließend das erste Befestigungselement in die ringförmige Membrandichtung eingelegt werden. Dadurch werden das erste und das zweite Befestigungselement sowie die Membrandichtung als vormontierte Einheit im Doppelsitzventil montiert.

Darüber hinaus stellt die Erfindung mit dem Anspruch 17 eine Getränkebehandlungs- und/oder Abfüllanlage mit wenigstens einem Doppelsitzventil nach einem der Ansprüche 1-15 bereit. Zudem kann die Getränkebehandlungs- und/oder Abfüllanlage und/oder das Doppelsitzventil die zuvor beschriebenen Merkmale einzelnen oder in beliebigen Kombinationen umfassen.

Die Getränkebehandlungs- und/oder Abfüllanlage kann einen Füller umfassen, um Behälter mit einem Produkt zu befüllen, das in den aseptischen Produktleitungen durch das Doppelsitzventil hindurch geführt wird. Denkbar ist, dass die Getränkebehandlungs- und/oder Abfüllanlage einen Pasteur zum Wärmebehandeln des Produkts umfasst, der über die aseptischen Produktleitungen und das Doppelsitzventil mit dem Füller verbunden ist. Vorzugsweise kann der Füller ein Karussell zum Transport der Behälter umfassen, an dem mehrere Füllorgane angeordnet sind, um das Produkt in die Behälter beim Transport abzufüllen.

Weitere Merkmale und Vorteile der Erfindung werden nachfolgend anhand der in den Figuren dargestellten Ausführungsbeispiele näher erläutert. Dabei zeigt:
- Figur 1: eine Schnittdarstellung eines erfindungsgemäßen Ausführungsbeispiels eines Doppelsitzventils in einer seitlichen Ansicht;
- Figur 2: ein Detail des Doppelsitzventils aus der Figur 1 im Bereich der ringförmigen Membrandichtung als seitliche Schnittdarstellung; und
- Figur 3: ein weiteres Detail des Doppelsitzventils aus der Figur 1 im Bereich des Ventilgehäuses als seitliche Schnittdarstellung.

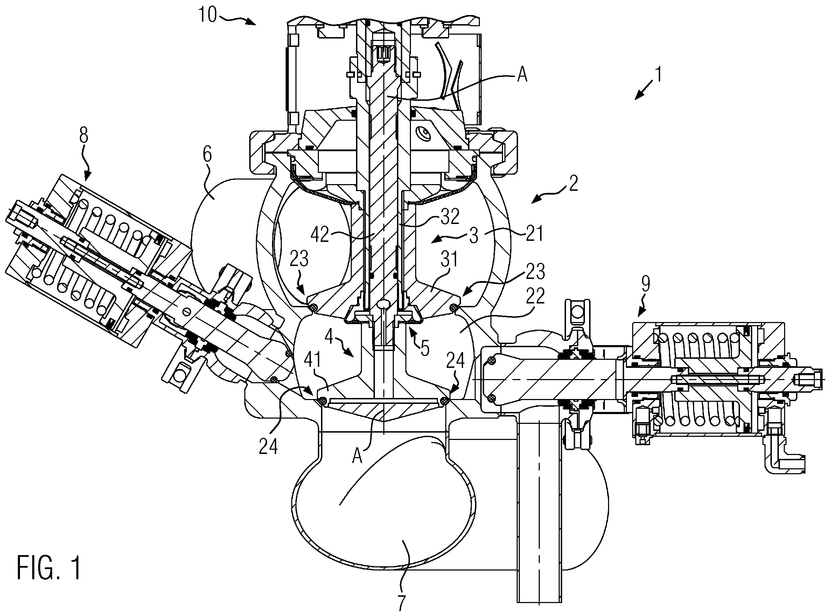

In der Figur 1 ist eine Schnittdarstellung eines erfindungsgemäßen Ausführungsbeispiels eines Doppelsitzventils 1 in einer seitlichen Ansicht dargestellt. Zu sehen ist, dass das Doppelsitzventil 1 das Ventilgehäuse 2 mit den zwei Leitungsanschlüssen 6, 7 zum Anschluss der aseptischen Produktleitungen umfasst. Zudem sind am Ventilgehäuse 2 zwischen den Leitungsanschlüssen 6 und 7 die beiden Ventilsitze 23, 24 ausgebildet, gegen die das erste Schließelement 3 bzw. das zweite Schließelement 4 wirken und die unabhängig voneinander über die Ventilschäfte 32 und 42 betätigbar sind. Dadurch wird zwischen den beiden Ventilsitzen 22, 24 im Ventilgehäuse 2 die Sicherheitskammer 22 gebildet, die die beiden Leitungsanschlüsse 6 und 7 gegen Leckagen abgrenzt.

Zu sehen ist auch, dass der eine der beiden Leitungsanschlüsse 6 in die Produktkammer 21 mündet, die über das erste Schließelement 3 und den ersten Ventilsitz 23 gegen die Sicherheitskammer 22 abgegrenzt ist. Weiterhin ist der andere der beiden Leitungsanschlüsse 7 zur Sicherheitskammer 22 durch das zweite Schließelement 4 und den zweiten Ventilsitz 24 abgegrenzt. Beide Schließelemente 3, 4 umfassen jeweils einen Ventilteller 31 bzw. 41 mit einem daran umfänglich angeordneten Dichtungselement, das hier beispielsweise als O-Ring ausgebildet ist und direkt gegen den entsprechenden Ventilsitz 23, 24 wirkt. Dadurch wird im geschlossenen Zustand eine besonders hohe Dichtwirkung erzielt.

Der erste Ventilschaft 32 umgibt den zweiten Ventilschaft 42 im Bereich der Produktkammer 21, so dass beide unabhängig voneinander durch Antriebe im Antriebsbereich 10 längs der Ventilachse A verfahrbar sind, um die beiden Schließelemente 3, 4 zu betätigen. Befinden sich beide Schließelemente 3, 4 in dem in der Figur 1 dargestellten geschlossenen Zustand, so ist die Verbindung zwischen den Leitungsanschlüssen 6 und 7 unterbrochen. Werden dagegen beide Schließelemente 3, 4 durch die beiden Ventilschäfte 32, 42 nach oben, also von den beiden Ventilsitzen 22, 24 wegverfahren, so ist eine Verbindung zwischen den beiden Leitungsanschlüssen 6 und 7 hergestellt.

Allerdings ist auch denkbar, dass es in dem in der Figur 1 dargestellten geschlossenen Zustand der beiden Schließelemente 3, 4 durch einen plötzlichen Druckanstieg in der mit dem Leitungsanschluss 7 verbundenen Produktleitung kommt. Dadurch wird in seltenen Fällen das zweite Schließelement 4 vom zweiten Ventilsitz 24 weggedrückt, so dass Leckagen in die Sicherheitskammer 22 einströmen können. Ebenfalls könnten durch defekte Dichtungen Medien in den Leckageraum einsickern. Die Sicherheitskammer 22 dient dann als Puffer, so dass die Leckagen nicht in die Produktkammer 21 gelangen können. Die Leckagen werden durch das offenstehende Ablaufventil 9 abgeführt.

Um die Sicherheitskammer 22 anschließend zu Reinigen und wieder in einen sterilen Zustand zu überführen, wird die Sicherheitskammer 22 mit dem Reinigungsventil 8 und dem Ablaufventil 9 mittels eines Reinigungsmittels gespült und anschließend mittels Heißdampf sterilisiert. Dadurch ist bei einem nachfolgenden Betätigen des Doppelsitzventils 1 wieder eine aseptische Produktbehandlung möglich.

Folglich sind der erste Ventilschaft 32 und der zweite Ventilschaft 42 unabhängig voneinander verfahrbar, so dass sich entsprechend auch die beiden Schließelemente 3, 4 gegeneinander bewegen können. Zur Abdichtung gegen die Sicherheitskammer 22 sind sie daher über die um die Ventilachse A ringförmig ausgebildete Membrandichtung 5 miteinander verbunden.

Um sowohl eine hohe Haltbarkeit als auch eine gewisse Flexibilität zu gewährleisten, ist die ringförmige Membrandichtung 5 aus zwei miteinander verbundenen Lagen aus gerecktem PTFE-Kunststoff gefertigt, wobei die Fasern der beiden Lagen zueinander senkrecht stehen.

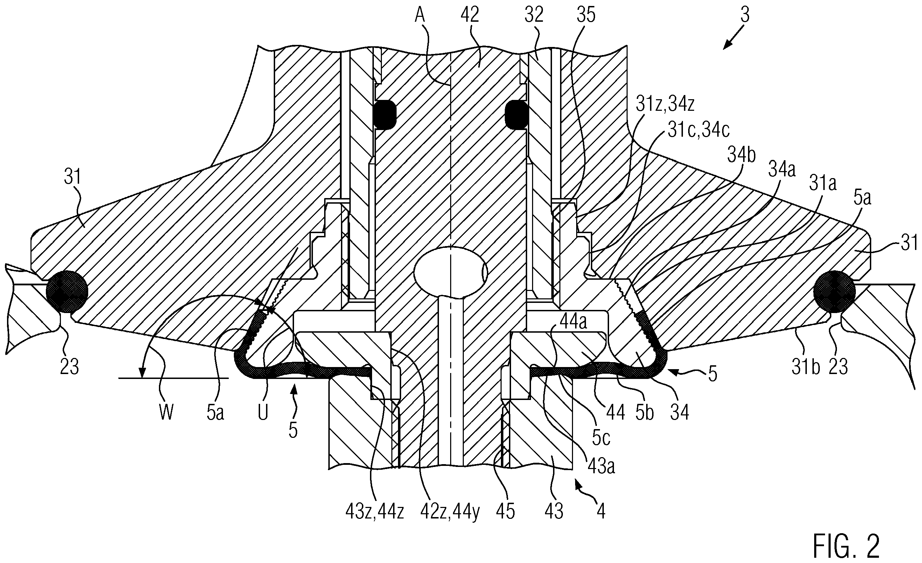

Der genaue Aufbau der ringförmigen Membrandichtung 5 und deren Montage im Ventilgehäuse 2 werden nachfolgend anhand der Figuren 2 - 3 näher erläutert:
In der Figur 2 ist ein Detail des Doppelsitzventils 1 aus der Figur 1 im Bereich der ringförmigen Membrandichtung 5 als Schnittdarstellung gezeigt. Zu sehen ist, dass die ringförmige Membrandichtung 5 den scheibenförmigen Membranbereich 5b, den äußeren Befestigungsbereich 5a und den inneren Befestigungsbereich 5c umfasst, wobei der äußere Befestigungsbereich 5a außen und der innere Befestigungsbereich 5c innen am scheibenförmigen Membranbereich 5b anschließen. Zudem ist zu sehen, dass der äußere Befestigungsbereich 5a nach innen zur Ventilachse A hin um den Biegewinkel W von mehr als 90°, in diesem Beispiel um ca. 120° umgebogen ist, so dass er auf der konischen Fläche 34a des ersten Befestigungselements 34 aufliegt. Der äußere Befestigungsbereich 5a der ringförmigen Membrandichtung 5 ist beispielsweise mit einem thermischen Umformverfahren um einen Umformwinkel von 100° nach innen umgebogen, dass er dauerhaft im Bereich des äußeren Befestigungsbereichs seine Form einhält, also auch ohne das Einspannen durch das erste Befestigungselement 34. Durch die Montage mit dem ersten Befestigungselement 34 wird der äußere Befestigungsbereich 5a der ringförmigen Membrandichtung 5 weiter umgebogen und eingespannt, so dass er den Biegewinkel W von ca. 120° erhält. Denkbar ist, dass der Biegewinkel W in einem Bereich von 91°-135° liegt, vorzugsweise in einem Bereich von 100°-130°. Dadurch liegt der äußere Befestigungsbereich 5 einerseits sicher an der konischen Fläche 34a des ersten Befestigungselements 34 an und andererseits kann das erste Befestigungselement 34 bei der Montage in die ringförmige Membrandichtung 5 eingesetzt werden, ohne den äußeren Befestigungsbereich 5a dabei zu sehr aufzubiegen.

Umgekehrt schließt in diesem Beispiel der äußere Befestigungsbereich 5a den Winkel U von ca. 60° mit dem scheibenförmigen Membranbereich 5b ein. Der Winkel U liegt also in einem Bereich von 45°- 89°, vorzugsweise in einem Bereich von 60°- 85°.

Darüber hinaus ist zu sehen, dass das erste Schließelement 3 die Gegenfläche 31a für die konische Fläche 34a des ersten Befestigungselements 34 umfasst, um den äußeren Befestigungsbereich 5a zwischen dem ersten Befestigungselement 34 und dem ersten Schließelement 3 einzuklemmen. Zu sehen ist auch, dass die konische Fläche 34a und die Gegenfläche 31a unterschiedliche Winkel aufweisen, um einen sich nach außen hin verjüngenden Klemmspalt zu bilden. Dadurch wird der äußere Befestigungsbereich 5a der ringförmigen Membrandichtung 5 vor einem Herausrutschen aus dem Klemmspalt gesichert.

Zu sehen ist auch, dass die konische Fläche 34a des ersten Befestigungselements 34 eine Riffelung aufweist, um den äußeren Befestigungsbereich 5a der ringförmigen Membrandichtung 5 gegen ein verrutschen zu sichern. Die Riffelung wird beispielsweise durch einen Vorschub beim Drehen des ersten Befestigungselements 34 erzeugt. Alternativ ist auch denkbar, dass im Bereich der konischen Fläche 34a eine erhöhte Oberflächenrauhigkeit vorliegt.

Weiteren sind das erste Befestigungselement 34 und der erste Ventilschaft 32 über das erste Schraubgewinde 35 miteinander verbunden. Dadurch wird das erste Befestigungselement 34 beim Einschrauben des ersten Ventilschafts 32 gegen die Gegenfläche 31a des ersten Schließelement 3 gezogen, so dass der äußere Befestigungsbereich 5a der ringförmigen Membrandichtung 5 zwischen dem ersten Befestigungselement 34 und dem ersten Schließelement 3 eingeklemmt wird. Dadurch kann die ringförmige Membrandichtung 5 besonders einfach und sicher mit dem ersten Schließelement 3 verbunden werden.

Weiterhin ist zu sehen, dass das erste Befestigungselement 34 die Zentrierfläche 34z und das erste Schließelement 3 die Zentrierfläche 31z aufweisen, mit dem das erste Befestigungselement 34 beim Verschrauben mit dem ersten Schraubgewinde 35 in dem ersten Schließelement 3 zentriert wird. Dadurch ergibt sich eine besonders genaue und gleichmäßige Klemmung der ringförmigen Membrandichtung 5.

Des Weiteren befinden sich zwischen den Zentrierflächen 31z, 34z und der Einspannfläche 34b die korrespondierenden, formschlüssigen Konturbereiche 31c, 34c, mit dem das erste Befestigungselement 34 und das erste Schließelement 3 durch eine formschlüssige Kontur, vorzugsweise ein ineinandergreifender Sechskant, gegeneinander gegen Verdrehen gesichert sind. Dies verhindert bei der Montage ein Verdrehen des Befestigungselements 34 gegenüber der ringförmigen Membrandichtung 5.

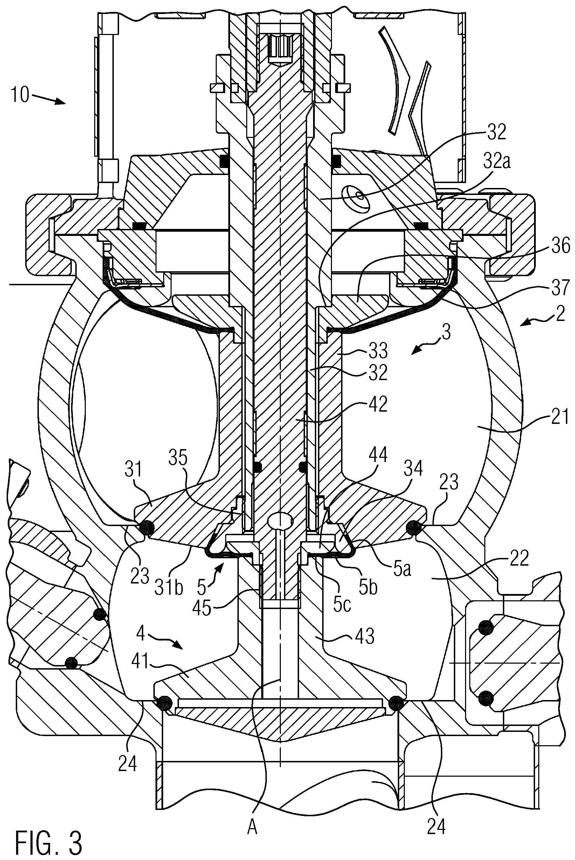

Des Weiteren ist in der Figur 2 zu sehen, dass an dem zweiten Schließelement 4 der Zwischenschaft 43 zur Verbindung mit dem zweiten Ventilschaft 42 angeordnet ist (siehe auch Fig. 1 und 3). Zwischen dem Zwischenschaft 43 und dem zweiten Ventilschaft 42 kann zudem über das zweite Schraubgewinde 45 auch das zweite Befestigungselement 44 eingespannt werden, so dass dadurch der innere Befestigungsbereich 5c der ringförmigen Membrandichtung 5 eingeklemmt werden kann. Dazu weist das zweite Befestigungselement 44 die kreisscheibenförmige Fläche 44a und der Zwischenschaft 43 am zum ersten Schließelement 3 hin gerichteten Ende die Gegenfläche 43a auf. Der innere Befestigungsbereich 5c wird durch das Verschrauben des zweiten Befestigungselements 4 mit dem Zwischenschaft 43 zwischen der kreisscheibenförmigen Fläche 44a und der Gegenfläche 43a eingeklemmt. Dadurch kann der innere Befestigungsbereich 5c der ringförmigen Membrandichtung 5 im Wesentlichen eben ausgebildet und damit besonders einfach hergestellt werden.

Weiterhin ist zu sehen, dass das zweite Befestigungselement 44 die Zentrierflächen 44y, 44z, der zweite Ventilschaft 42 die Zentrierfläche 42z und der Zwischenschaft 43 des ersten Schließelements 3 die Zentrierfläche 43z aufweisen. Dadurch kann der Zwischenschaft über das zweite Befestigungselement 44 an dem zweiten Ventilschaft 42 zentriert werden, so dass der in der Figur 1 dargestellte Ventilteller 41 gegenüber dem zweiten Ventilsitz 24 bzw. der Ventilachse A genau zentriert ist. Zudem wird dadurch erreicht, dass auch die Klemmung des inneren Befestigungsbereich 5c der ringförmigen Membrandichtung 5 gleichmäßig erfolgt.

Darüber hinaus ist in der Figur 2 zu sehen, dass die ringförmige Membrandichtung 5 an der tellerförmigen Seite 31b des ersten Schließelements 3, also an dessen Unterseite angeordnet ist. Diese bildet einen Wandabschnitt der Sicherheitskammer 22 (Figur 1), wodurch an der ringförmigen Membrandichtung 5 anhaftende Produktreste durch die Schwerkraft besonders einfach abfließen können. Dies ist besonders günstig für die aseptische Produktbehandlung.

In der Figur 3 ist ein weiteres Detail des Doppelsitzventils 1 aus der Figur 1 im Bereich des Ventilgehäuses 2 als seitliche Schnittdarstellung dargestellt. Anhand der Figur 3 wird die Montage der ringförmigen Membrandichtung 5 genauer erläutert:
Zunächst wird das zweite Befestigungselement 44 in die ringförmige Membrandichtung 5 so eingelegt, dass die kreisscheibenförmige Fläche 44a korrespondierend mit dem inneren Befestigungsbereich 5c in Kontakt kommt. Zur einfachen und genauen Montage weist das zweite Befestigungselement 44 einen Fortsatz auf, der durch die Öffnung innerhalb des inneren Befestigungsbereichs 5c hindurch ragt. Weiterhin wird das erste Befestigungselement 34 in die ringförmige Membrandichtung 5 eingelegt, so dass durch die Federwirkung des äußeren Befestigungsbereichs 5a ein Kraftschluss mit der konischen Fläche 34a des ersten Befestigungselements 34 erfolgt. Dadurch wird die ringförmige Membrandichtung am ersten Befestigungselement 34 fixiert und das zweite Befestigungselement 44 vor einem Herausfallen gesichert. Folglich können nun die ringförmige Membrandichtung 5, das erste Befestigungselement 34 und das zweite Befestigungselement 44 als Verbund in den Ventilteller 31 des ersten Schließelements 3 eingesetzt werden.

Anschließend wird der erste Ventilschaft 32 durch den Verbindungsschaft 33 des ersten Schließelements 3 eingeführt und über das erste Schraubgewinde 35 mit dem zweiten Befestigungselement 34 verschraubt. Der erste Ventilschaft 32 weist einen Absatz 32a auf, der sich gegen den Verbindungsschaft 33 des ersten Schließelements 3 abstützt. Beim Verschrauben wird so das erste Befestigungselement 34 gegen das erste Schließelement 3 gezogen, wodurch der äußere Befestigungsbereich 5a der ringförmigen Membrandichtung 5 eingeklemmt wird.

Zudem ist ohne Relevanz für die Erfindung in der Figur 3 zu sehen, dass sich der Absatz 32a des ersten Ventilschafts 32 über das dritte Befestigungselement 36 gegen den Verbindungsschaft 33 so abstützt, dass dazwischen zusätzlich der innere Rand der oberen Membran 37 eingeklemmt wird, die den Produktraum 21 nach oben hin zum Antriebsbereich 10 abdichtet.

Zudem wird der zweite Verbindungsschaft 42 über das zweite Schraubgewinde 45 mit dem Zwischenschaft 43 des zweiten Schließelements 4 verschraubt. Dadurch wird der innere Befestigungsbereich 5c zwischen dem zweiten Befestigungselement 44 und dem Zwischenschaft 43 eingeklemmt und fixiert.

Bei einer Wartung ist die Demontage der ringförmigen Membrandichtung 5 mit entsprechend umgekehrten Schritten möglich.

Bei dem erfindungsgemäßen Doppelsitzventil 1 ist es also möglich, mit besonders wenigen Teilen und durch einfache Montageschritte die ringförmige Membrandichtung 5 ein- bzw. auszubauen. Dadurch, dass das erste Befestigungselement 34 und das zweite Befestigungselement 44 radial innerhalb des äußeren Befestigungsbereichs 5a der ringförmigen Membrandichtung 5 angeordnet sind, entstehen zur Sicherheitskammer 22 oder zur Produktkammer 21 keine weiteren Kontaktstellen bzw. Spalten. Folglich sind also keine weiteren Stellen mit mikroskopischen Spalten gegeben, in denen sich Produktreste anlagern könnten oder die abgedichtet werden müssten.

Es versteht sich, dass in den zuvor beschriebenen Ausführungsbeispielen genannte Merkmale nicht auf diese Merkmalskombination beschränkt sind, sondern auch einzelnen oder in beliebigen anderen Kombinationen möglich sind.

## Patentansprüche

1. Doppelsitzventil (1) für aseptische Produktleitungen, mit
- einem Ventilgehäuse (2),
- zwei an dem Ventilgehäuse (2) angeordneten Leitungsanschlüssen (6, 7) zum Anschluss der aseptischen Produktleitungen an das Ventilgehäuse (2),
- zwei zwischen den Leitungsanschlüssen (6, 7) am Ventilgehäuse (2) ausgebildeten Ventilsitzen (23, 24), die eine dazwischen ausgebildete Sicherheitskammer (22) für Leckagen gegen die Leitungsanschlüsse (6, 7) abgrenzen,
- einem ersten mittels eines ersten Ventilschafts (32) betätigbares Schließelement (3), das gegen einen der beiden Ventilsitze (23) wirkt, und
- mit einem zweiten mittels eines zweiten Ventilschafts (42) betätigbares Schließelement (4), das gegen den anderen der beiden Ventilsitze (24) wirkt,
wobei der erste Ventilschaft (32) den zweiten Ventilschaft (42) wenigstens abschnittsweise umgibt, so dass beide unabhängig voneinander entlang einer Ventilachse (A) bewegbar sind, und
wobei der erste Ventilschaft (32) mit dem zweiten Ventilschaft (42) zur Abdichtung gegenüber der Sicherheitskammer (22) über eine um die Ventilachse (A) ringförmig ausgebildete Membrandichtung (5) verbunden ist,
**dadurch gekennzeichnet, dass**
ein äußerer Befestigungsbereich (5a) der ringförmigen Membrandichtung (5) nach innen zur Ventilachse (A) hin um einen Biegewinkel (W) von mehr als 90° umgebogen ist, so dass er auf einer konischen Fläche (34a) eines ersten Befestigungselements (34) aufliegt.

2. Doppelsitzventil nach Anspruch 1, wobei der äußere Befestigungsbereich (5a) der ringförmigen Membrandichtung (5) durch ein Umformverfahren um einen Umformwinkel derart umgeformt ist, dass der Umformwinkel in einem unmontierten Zustand in einem Bereich von 91° - 135°, vorzugsweise in einem Bereich von 95° - 120° liegt.

3. Doppelsitzventil (1) nach Anspruch 1 oder 2, wobei der äußere Befestigungsbereich (5a) um den Biegewinkel (W) von mehr als 91°, vorzugsweise von mehr als 95°, weiterhin vorzugsweise von mehr als 100° umgebogen ist.

4. Doppelsitzventil (1) nach einem der vorangegangenen Ansprüche, wobei die ringförmige Membrandichtung (5) an einer tellerförmigen Seite (31b) des ersten Schließelements (3) angeordnet ist, die einen Wandabschnitt der Sicherheitskammer (22) bildet.

5. Doppelsitzventil (1) nach einem der vorangegangenen Ansprüche, wobei das erste Schließelement (3) eine Gegenfläche (31a) für die konische Fläche (34a) des ersten Befestigungselements (34) umfasst, um den äußeren Befestigungsbereich (5a) zwischen dem ersten Befestigungselement (34) und dem ersten Schließelement (3) einzuklemmen, vorzugsweise wobei die konische Fläche (34a) und die Gegenfläche (31a) einen sich nach außen hin verjüngenden Klemmspalt bilden, um den äußeren Befestigungsbereich (5a) der ringförmigen Membrandichtung (5) vor einem Herausrutschen aus dem Klemmspalt zu sichern.

6. Doppelsitzventil (1) nach Anspruch 5, wobei die konische Fläche (34a) des ersten Befestigungselements (34) und/oder die Gegenfläche (31a) des ersten Schließelements (3) eine Riffelung oder erhöhte Oberflächenrauhigkeit aufweisen, um den äußeren Befestigungsbereich (5a) der ringförmigen Membrandichtung (5) gegen Verrutschen zu fixieren.

7. Doppelsitzventil (1) nach einem der vorangegangenen Ansprüche, wobei das erste Befestigungselement (34) und der erste Ventilschaft (32) über ein erstes Schraubgewinde (35) derart miteinander verbindbar sind, dass beim Verschrauben der äußere Befestigungsbereich (5a) der ringförmigen Membrandichtung (5) zwischen dem ersten Befestigungselement (34) und dem ersten Schließelement (3) einklemmbar ist.

8. Doppelsitzventil (1) nach einem der vorangegangenen Ansprüche, wobei das erste Befestigungselement (34) und das erste Schließelement (3) mit Zentrierflächen (31z, 34z) ausgebildet sind, um das erste Befestigungselement (34) am ersten Schließelement (3) zu zentrieren.

9. Doppelsitzventil (1) nach einem vorangegangenen Ansprüche, wobei das erste Befestigungselement (34) und das erste Schließelement (3) mit korrespondierenden formschlüssigen Konturbereichen (31c, 34c) ausgebildet sind, um ein Verdrehen des ersten Befestigungselements (34) gegen das erste Schließelement (3) zu verhindern.

10. Doppelsitzventil (1) nach einem der vorangegangenen Ansprüche, wobei an dem zweiten Schließelement (4) in einem Bereich der Sicherheitskammer (22) ein Zwischenschaft (43) zur Verbindung mit dem zweiten Ventilschaft (42) angeordnet ist, und wobei die ringförmige Membrandichtung (5) einen inneren Befestigungsbereich (5c) umfasst, der durch ein zweites Befestigungselement (44) mit dem Zwischenschaft (43) verbunden ist.

11. Doppelsitzventil (1) nach Anspruch 10, wobei der Zwischenschaft (43) an einem zum ersten Schließelement (3) hin gerichteten Ende eine Gegenfläche (43a) für eine kreisscheibenförmige Fläche (44a) des zweiten Befestigungselements (44) umfasst, um den inneren Befestigungsbereich (5c) der ringförmigen Membrandichtung (5) zwischen dem zweiten Befestigungselement (44) und dem Zwischenschaft (43) einzuklemmen.

12. Doppelsitzventil (1) nach Anspruch 10 oder 11, wobei das zweite Befestigungselement (44) und der Zwischenschaft (43) über ein zweites Schraubgewinde (45) derart miteinander verbindbar sind, dass beim Verschrauben des zweiten Schraubgewindes (45) der innere Befestigungsbereich (5c) der ringförmigen Membrandichtung (5) zwischen dem zweiten Befestigungselement (44) und dem Zwischenschaft (43) eingeklemmt wird.

13. Doppelsitzventil (1) nach einem der Ansprüche 10 - 12, wobei der zweite Ventilschaft (42), das zweite Befestigungselement (44) und/oder der Zwischenschaft (43) mit Zentrierflächen (42z, 43z, 44y, 44z) ausgebildet sind, um den Zwischenschaft (43) und/oder das zweite Befestigungselement (44) am zweiten Ventilschaft (42) zu zentrieren.

14. Doppelsitzventil (1) nach einem der Ansprüche 10 - 13, wobei die ringförmige Membrandichtung (5) einen scheibenförmigen Membranbereich (5b) umfasst, wobei der innere Rand des scheibenförmigen Membranbereichs (5) den inneren Befestigungsbereich (5c) bildet, wobei der äußere Befestigungsbereich (5a) außen an dem scheibenförmigen Membranbereich (5b) anschließt, und wobei der äußere Befestigungsbereich (5a) mit dem scheibenförmigen Membranbereich (5b) einen Winkel (U) von weniger als 90° einschließt, vorzugsweise von weniger als 89°, weiterhin vorzugsweise von weniger als 85°, weiterhin vorzugsweise von weniger als 80°.

15. Doppelsitzventil (1) nach einem der vorangegangenen Ansprüche, wobei die ringförmige Membrandichtung (5) wenigstens zwei miteinander verbundene Lagen aus gerecktem PTFE-Kunststoff umfasst, wobei Fasern der verbundenen Lagen in unterschiedlichen Richtungen zueinander ausgerichtet sind, vorzugsweise wobei die unterschiedlichen Richtungen senkrecht zueinander stehen.

16. Verfahren zur Montage eines Doppelsitzventils (1) nach einem der Ansprüche 1 - 15, wobei das erste Befestigungselement (34) zunächst in die ringförmige Membrandichtung (5) eingelegt wird, so dass durch eine Federwirkung des äußeren Befestigungsbereichs (5a) ein Kraftschluss mit der konischen Fläche (34a) des ersten Befestigungselements (34) erfolgt und darüber die ringförmige Membrandichtung (5) am ersten Befestigungselement (34) fixiert wird, und wobei anschließend die am ersten Befestigungselement (34) fixierte, ringförmige Membrandichtung (5) mit dem ersten Schließelement (3) verbunden wird.

17. Getränkebehandlungs- und/oder Abfüllanlage mit wenigstens einem Doppelsitzventil (1) nach einem der Ansprüche 1 - 15.

## Claims

1. Double seat valve (1) for aseptic lines for product with
- a valve housing (2),
- two line ports (6, 7) arranged on said valve housing (2) for connecting said aseptic lines for product to said valve housing (2),
- two valve seats (23, 24) which are formed between said line ports (6, 7) on said valve housing (2) and define a safety chamber (22) formed therebetween for leaks against said line ports (6, 7),
- a first closure element (3) which is actuatable by a first valve stem (32) and acts against one of said two valve seats (23), and
- a second closure element (4) which is actuatable by a second valve stem (42) and acts against the other of said two valve seats (24),
where said first valve stem (32) at least in sections surrounds said second valve stem (42) so that both are movable independently along a valve axis (A), and
where said first valve stem (32) is connected via a diaphragm seal (5), which is formed to have a ring shape around said valve axis (A), to said second valve stem (42) for sealing against said safety chamber (22),
**characterized in that**
an outer fastening portion (5a) of said ring-shaped diaphragm seal (5) is bent inwardly toward said valve axis (A) by a bending angle (W) of more than 90°, so that it abuts against a tapered surface (34a) of a first fastening element (34).

2. Double seat valve according to claim 1, where said outer fastening portion (5a) of said ring-shaped diaphragm seal (5) is deformed in a deformation process by a deformation angle such that said deformation angle in an unassembled state is in a range of 91° - 135°, preferably in a range of 95° - 120°.

3. Double seat valve (1) according to claim 1 or 2, where said outer fastening portion (5a) is bent by the bending angle (W) of more than 91°, preferably of more than 95°, more preferably of more than 100°.

4. Double seat valve (1) according to one of the preceding claims, where said ring-shaped diaphragm seal (5) is arranged on a plate-shaped side (31b) of said first closure element (3) which forms a wall section of said safety chamber (22).

5. Double seat valve (1) according to one of the preceding claims, where said first closure element (3) comprises a mating surface (31a) for said tapered surface (34a) of said first fastening element (34) to clamp said outer fastening portion (5a) between said first fastening element (34) and said first closure element (3), where said tapered surface (34a) and said mating surface (31a) preferably form an outwardly tapered clamping gap to secure said outer fastening portion (5a) of said ring-shaped diaphragm seal (5) against slipping out of said clamping gap.

6. Double seat valve (1) according to claim 5, where said tapered surface (34a) of said first fastening element (34) and/or said mating surface (31a) of said first closure element (3) has a corrugation or increased surface roughness in order to prevent said outer fastening portion (5a) of said ring-shaped diaphragm seal (5) from slipping out of place.

7. Double seat valve (1) according to one of the preceding claims, where said first fastening element (34) and said first valve stem (32) are connected to one another by way of a first screw thread (35) such that said outer fastening portion (5a) of said ring-shaped diaphragm seal (5) can be clamped in between said first fastening element (34) and said first closure element (3) when screwed together.

8. Double seat valve (1) according to one of the preceding claims, where said first fastening element (34) and said first closure element (3) are formed with centering surfaces (31z, 34z) for centering said first fastening element (34) on said first closure element (3).

9. Double seat valve (1) according to one of the preceding claims, where said first fastening element (34) and said first closure element (3) are formed with corresponding positive-fit contour regions (31c, 34c) in order to prevent said first fastening element (34) from rotating against said first closure element (3).

10. Double seat valve (1) according to one of the preceding claims, where an intermediate shaft (43) is arranged on said second closure element (4) in a region of said safety chamber (22) to connect to said second valve stem (42), and where said ring-shaped diaphragm seal (5) comprises an inner fastening portion (5c) which is connected to said intermediate shaft (43) by a second fastening element (44).

11. Double seat valve (1) according to claim 10, where said intermediate shaft (43) at an end facing said first closure element (3) comprises a mating surface (43a) for a circular disk-shaped surface (44a) of said second fastening element (44) in order to clamp said inner fastening portion (5c) of said ring-shaped diaphragm seal (5) between said second fastening element (44) and said intermediate shaft (43).

12. Double seat valve (1) according to claim 10 or 11, where said second fastening element (44) and said intermediate shaft (43) can be connected to one another by way of a second screw thread (45) in such a way that said inner fastening portion (5c) of said ring-shaped diaphragm seal (5) is clamped between said second fastening element (44) and said intermediate shaft (43) when said second screw thread (45) is screwed in.

13. Double seat valve (1) according to one of the claims 10 - 12, where said second valve stem (42), said second fastening element (44), and/or said intermediate shaft (43) are formed with centering surfaces (42z, 43z, 44y, 44z) for centering said intermediate shaft (43) and/or said second fastening element (44) on said second valve stem (42).

14. Double seat valve (1) according to one of the claims 10-13, where said ring-shaped diaphragm seal (5) comprises a disk-shaped diaphragm region (5b), where said inner rim of said disk-shaped diaphragm region (5) forms said inner fastening portion (5c), where said outer fastening portion (5a) adjoins on the outside of said disk-shaped membrane region (5b), and where said outer fastening portion (5a) and said disk-shaped diaphragm region (5b) form an angle (U) of less than 90°, preferably of less than 89°, more preferably of less than 85°, even more preferably of less than 80°.

15. Double seat valve (1) according to one of the preceding claims, where said ring-shaped diaphragm seal (5) comprises at least two interconnected layers of expanded PTFE plastic material, wherein the fibers of the interconnected layers are oriented in different directions relative to each other, the different directions preferably being perpendicular to each other.

16. Method for assembling a double seat valve (1) according to one of the claims 1-15, where said first fastening element (34) is first inserted into said ring-shaped diaphragm seal (5), so that a force-locked connection to said tapered surface (34a) of said first fastening element (34) is effected by a spring force of said outer fastening portion (5a), and said ring-shaped diaphragm seal (5) is therewith secured to said first fastening element (34), and where said ring-shaped diaphragm seal (5) secured to said first fastening element (34) is subsequently connected to said first closure element (3).

17. Beverage treatment and/or filling system with at least one double seat valve (1) according to one of the claims 1-15.

## Revendications

1. Soupape à double siège (1) pour conduites de produits aseptiques,
- avec un boîtier de soupape (2),
- deux raccords de conduite (6, 7) disposés sur le boîtier de soupape (2) pour le raccordement des conduites de produits aseptiques au boîtier de soupape (2),
- deux sièges de soupape (23, 24) formés entre les raccords de conduite (6, 7) sur le boîtier de soupape (2), qui délimitent une chambre de sécurité (22) formée entre eux, pour des fuites, par rapport aux raccords de conduite (6, 7),
- un premier élément de fermeture (3) pouvant être actionné au moyen d'une première tige de soupape (32), qui agit contre l'un des deux sièges de soupape (23), et
- avec un deuxième élément de fermeture (4) pouvant être actionné au moyen d'une deuxième tige de soupape (42), qui agit contre l'autre des deux sièges de soupape (24),
dans lequel la première tige de soupape (32) entoure la seconde tige de soupape (42) au moins par sections, de sorte que les deux sont déplaçables indépendamment l'une de l'autre le long d'un axe de soupape (A), et
dans lequel la première tige de soupape (32) est reliée à la deuxième tige de soupape (42) pour assurer l'étanchéité par rapport à la chambre de sécurité (22) par l'intermédiaire d'un joint à membrane (5) qui est formé de manière annulaire autour de l'axe de soupape (A),
**caractérisé en ce que**
une région de fixation extérieure (5a) du joint à membrane annulaire (5) est pliée vers l'intérieur en direction de l'axe de soupape (A) selon un angle de pliage (W) supérieur à 90° de manière à reposer sur une surface conique (34a) d'un premier élément de fixation (34).

2. Soupape à double siège selon la revendication 1, dans laquelle la région de fixation extérieure (5a) du joint à membrane annulaire (5) est déformée par un procédé de déformation selon un angle de déformation de telle manière que l'angle de déformation à l'état non monté se situe dans une plage de 91° à 135°, de préférence dans une plage de 95° à 120°.

3. Soupape à double siège (1) selon la revendication 1 ou 2, dans laquelle la région de fixation extérieure (5a) est pliée selon l'angle de pliage (W) supérieur à 91°, de préférence supérieur à 95°, en outre préférablement supérieur à 100°.

4. Soupape à double siège (1) selon l'une des revendications précédentes, dans laquelle le joint à membrane annulaire (5) est disposé sur un côté en forme d'assiette (31b) du premier élément de fermeture (3) formant une section de paroi de la chambre de sécurité (22).

5. Soupape à double siège (1) selon l'une des revendications précédentes, dans laquelle le premier élément de fermeture (3) comporte une surface antagoniste (31a) pour la surface conique (34a) du premier élément de fixation (34) afin de serrer la région de fixation extérieure (5a) entre le premier élément de fixation (34) et le premier élément de fermeture (3), de préférence dans lequel la surface conique (34a) et la surface antagoniste (31a) forment une fente de serrage se rétrécissant vers l'extérieur pour empêcher la région de fixation extérieure (5a) du joint à membrane annulaire (5) de glisser hors de la fente de serrage.

6. Soupape à double siège (1) selon la revendication 5, dans laquelle la surface conique (34a) du premier élément de fixation (34) et/ou la surface antagoniste (31a) du premier élément de fermeture (3) présentent des striures ou une rugosité de surface accrue pour fixer la région de fixation extérieure (5a) du joint à membrane annulaire (5) de manière à éviter qu'il ne glisse.

7. Soupape à double siège (1) selon l'une des revendications précédentes, dans laquelle le premier élément de fixation (34) et la première tige de soupape (32) peuvent être reliés entre eux par l'intermédiaire d'un premier filetage (35) de telle manière que, lors du vissage, la région de fixation extérieure (5a) du joint à membrane annulaire (5) peut être serrée entre le premier élément de fixation (34) et le premier élément de fermeture (3).

8. Soupape à double siège (1) selon l'une des revendications précédentes, dans laquelle le premier élément de fixation (34) et le premier élément de fermeture (3) sont formés avec des surfaces de centrage (31z, 34z) pour centrer le premier élément de fixation (34) sur le premier élément de fermeture (3).

9. Soupape à double siège (1) selon l'une des revendications précédentes, dans laquelle le premier élément de fixation (34) et le premier élément de fermeture (3) sont formés avec des régions de contour (31c, 34c) correspondantes à engagement positif pour empêcher la rotation du premier élément de fixation (34) par rapport au premier élément de fermeture (3).

10. Soupape à double siège (1) selon l'une des revendications précédentes, dans laquelle une tige intermédiaire (43) pour la liaison avec la deuxième tige de soupape (42) est disposée sur le deuxième élément de fermeture (4) dans une région de la chambre de sécurité (22), et dans laquelle le joint à membrane annulaire (5) comporte une région de fixation intérieure (5c) qui est reliée à la tige intermédiaire (43) par un deuxième élément de fixation (44).

11. Soupape à double siège (1) selon la revendication 10, dans laquelle la tige intermédiaire (43) comprend, à une extrémité orientée vers le premier élément de fermeture (3), une surface antagoniste (43a) pour une surface en forme de disque circulaire (44a) du second élément de fermeture (44) pour serrer la région de fixation intérieure (5c) du joint à membrane annulaire (5) entre le second élément de fermeture (44) et la tige intermédiaire (43).

12. Soupape à double siège (1) selon la revendication 10 ou 11, dans laquelle le deuxième élément de fixation (44) et la tige intermédiaire (43) peuvent être reliés entre eux par un deuxième filetage (45) de telle manière que, lorsque le deuxième filetage (45) est vissé, la région de fixation intérieure (5c) du joint à membrane annulaire (5) est serrée entre le deuxième élément de fixation (44) et la tige intermédiaire (43).

13. Soupape à double siège (1) selon l'une des revendications 10 - 12, dans laquelle la deuxième tige de soupape (42), le deuxième élément de fixation (44) et/ou la tige intermédiaire (43) sont réalisés avec des surfaces de centrage (42z, 43z, 44y, 44z) afin de centrer la tige intermédiaire (43) et/ou le deuxième élément de fixation (44) sur la deuxième tige de soupape (42).

14. Soupape à double siège (1) selon l'une des revendications 10 - 13, dans laquelle le joint à membrane annulaire (5) comprend une région de membrane en forme de disque (5b), le bord intérieur de la région de membrane en forme de disque (5) formant la région de fixation intérieure (5c), la région de fixation extérieure (5a) se raccordant extérieurement à la région de membrane en forme de disque (5b), et la région de fixation extérieure (5a) formant un angle (U) inférieur à 90°, de préférence inférieur à 89°, en outre préférablement inférieur à 85°, en outre préférablement inférieur à 80° avec la région de membrane en forme de disque (5b).

15. Soupape à double siège (1) selon l'une des revendications précédentes, dans laquelle le joint à membrane annulaire (5) comprend au moins deux couches reliées entre elles en matière synthétique PTFE étirée, les fibres des couches reliées entre elles étant orientées dans des directions différentes les unes par rapport aux autres, les différentes directions étant de préférence perpendiculaires entre elles.

16. Procédé de montage d'une soupape à double siège (1) selon l'une des revendications 1 - 15, dans lequel le premier élément de fixation (34) est d'abord inséré dans le joint à membrane annulaire (5), de sorte qu'une liaison par frottement avec la surface conique (34a) du premier élément de fixation (34) est réalisée par une action élastique de la région de fixation extérieure (5a), et le joint à membrane annulaire (5) est ainsi fixé au premier élément de fixation (34), et dans lequel le joint à membrane annulaire (5) fixé au premier élément de fixation (34) est ensuite relié au premier élément de fermeture (3).

17. Installation de traitement et/ou de remplissage de boissons avec au moins une soupape à double siège (1) selon l'une des revendications 1 - 15.
